# EUROPÄISCHE PATENTANMELDUNG

(11) **EP 3 952 071 A1**
(43) Veröffentlichungstag der Anmeldung: **09.02.2022**
(21) Anmeldenummer: 20189616.4
(22) Anmeldetag: 05.08.2020
(51) Int. Cl.: H02K 7/00, H02K 1/30, B29C 64/188

(54) **ELEKTROMOTOR MIT HYDRAULISCHER SPANNBUCHSE**

(71) Anmelder: Siemens Aktiengesellschaft, 80333 München (DE)
(72) Erfinder: Grimm, Sandro, 98617 Meiningen (DE); Hilfer, Alexander, 97616 Bad Neustadt (DE)

(57) **Zusammenfassung**

Die Erfindung betrifft einen Elektromotor (1) mit einem Gehäuse (2) aufweisend zumindest einen Stator (3) und einen Rotor (4), wobei der Elektromotor (1) Mittel (5) zur Aufnahme einer Kopplungselements (5) zur mechanischen Kopplung des Rotors (4) (oder einer mit dem Rotor gekoppelten Rotorwelle) mit einer mit dem Rotor (4) zu koppelnden Welle (6). Für die Herstellung eines möglichst optimalen Kraftschlusses wird vorgeschlagen, dass das Kopplungselement (5) als hydraulisches Kopplungselement ausgebildet ist.

## Beschreibung

Die Erfindung betrifft einen Elektromotor mit einem Gehäuse aufweisend zumindest einen Stator und einen Rotor, wobei der Elektromotor Mittel zur Aufnahme einer Kopplungselements zur mechanischen Kopplung des Rotors oder einer mit dem Rotor gekoppelten Rotorwelle mit einer mit dem Rotor zu koppelnden Welle.

Die Erfindung betrifft weiter ein Verfahren zur Kopplung einer Rotorwelle eines derartigen Elektromotors mit einer mit der Rotorwelle zu koppelnden Kopplungswelle einer Anwendungsvorrichtung.

Elektromotoren werden häufig für verschiedenste kundenseitige Anwendungen verwendet. Somit ist es erfordlich, dass häufig spezielle kundenseitige mechanische Anbauten an derartige Elektromtoren erforderlich sind. Beispielsweise werden für spezifische Kunden Anforderungen, beispielsweise für Schneckenaufnahmen, motorseitig spezielle Aufnahmevorrichtungen, sogenannte Interfaces benötigt, die in der Regel aufwändig zu fertigen und zu montieren sind. In der Regel sind dabei für unterschiedliche Kundenanforderungen und unterschiedliche Schnittstellen und Interfaces individuelle Bauteile erforderlich.

Aus der DE 10 2014 012 348 A1 ist ein Elektromotor, aufweisend einen Stator und einen Rotor, und Verfahren zum Herstellen einer elektromotorisch angetriebenen Maschine bekannt, wobei der Rotor eine Rotorwelle und ein mit der Rotorwelle drehfest verbundenes Ringteil aufweist, wobei der Stator ein Statorgehäuse und ein mit dem Statorgehäuse verbundenes Flanschteil aufweist, wobei am Ringteil ein erster Konusflächenabschnitt ausgeformt ist und am Flanschteil ein zweiter Konusflächenabschnitt, wobei die Ausrichtung und Zentrierung des Rotors relativ zum Stator mittels Anpressen der ersten Konusflächenabschnitts an den zweiten Konusflächenabschnitt fixierbar ist.

Der Erfindung liegt die Aufgabe zu Grunde, einen Elektromotor dahingehend zu verbessern, dass auf einfache Art und Weise unabhängig von mechanischen Konturen jede Art von Kundenwellen mit dem Rotor bzw. mit einer Rotorwelle koppelbar ist.

Diese Aufgabe wird bei einem Elektromotor der eingangs genannten Art dadurch gelöst, dass das Kopplungselement als hydraulisches Kopplungselement ausgebildet ist, das derart ausgebildet ist, einen gleichförmig verteilten hydraulischen Druck sowohl auf den Rotor oder die Rotorwelle als auch auf die zu koppelnde Welle der Anwendungsvorrichtung auszuüben.

Diese Aufgabe wird weiter durch ein Verfahren zur Kopplung einer Rotorwelle eines derartigen Elektromotors mit einer mit der Rotorwelle zu koppelnden Kopplungswelle einer Anwendungsvorrichtung gelöst, wobei der Elektromotor ein Gehäuse mit mindestens einem Stator und einem Rotor aufweist, wobei zur Kopplung der Rotorwelle mit der Rotorwelle der zu koppelnden Kopplungswelle der Anwendungsvorrichtung ein als hydraulisches Kopplungselement ausgebildetes Kopplungselement verwendet wird.

Der Erfindung liegt die Erkenntnis zugrunde, dass mittels eines hydraulischen standardisierten Kopplungselements anstelle von aufwändigen kundenseitigen mechanischen Spezialanbauten eine einfache Möglichkeit geschaffen wird, verschiedenste Arten von Kundenwellen in ein motorseitig standardisiertes Interface als mechanisches Schnittstellenmodul zu verspannen. Dies gelingt mit Hilfe des als hydraulisches Kupplungselement ausgebildeten Spannsatzes in der Weise, dass auf einfache Art und Weise alle möglichen Konturen von kundenseitigen Wellen aufgrund des hydraulischen Kupplungselementes schnell verbunden und ebenso schnell wieder auch gelöst werden können. Insgesamt wird hierdurch eine gesteigerte Flexibilität und eine standardisierte Schnittstelle auf der Motorenseite geschaffen, wobei durch das neue hydraulische Spannprinzip es nun möglich wird, die beiden Wellen, nämlich die motorseitige Welle sowie die Kundenwelle miteinander zu verspannen sowie auch die Verbindung schnell wieder zu lösen, beispielsweise ist dies von großer Bedeutung bei der Anwendung "Schneckenspritze", bei der es nun möglich wird, die Schnecke nach hinten aus dem Motor nach Lösen des hydraulischen Kopplungselements einfach herauszuziehen. Durch den Einsatz des als hydraulisches Kopplungselement ausgebildeten Spannsatzes wird in der Regel lediglich durch eine Schraube oder durch einen einzustellenden hydraulischen Druck der Spannsitz mechanisch gleichförmig auf die Oberflächen verteilt. Hierdurch wird ohne weiteren Montageaufwand gewährleistet, dass dies auf der gesamten Oberfläche der zu verbindenden Elemente, in der Regel beider Wellen, nämlich der Motorwelle und der Anwendungswelle zu einer gleichförmigen Kraftverteilung kommt.

Vorteilhafte Ausgestaltungsformen sind in den Unteransprüchen enthalten.

Eine aufwandsarme und gleichzeitig sichere und leicht lösbare Kopplung des Elektromotors mit der Anwendungsvorrichtung wird dadurch sichergestellt, dass das hydraulische Kopplungselement als hydraulische Spannbuchse ausgebildet ist, die aus einer doppelwandigen mit einem Druckmedium gefüllten Stahlhülse und einem Flanschteil besteht, wobei die Spannbuchse zur Gewährleistung einer gleichförmigen Kraftverteilung auf die gesamte Oberflächen im Bereich der der zu koppelnden Rotorwelle und der Welle der Anwendungsvorrichtung vorgesehen ist.

Eine einfache und sichere Einstellung des Drucks des hydraulischen Kopplungselements kann auf einfache Weise dadurch erfolgen, dass das hydraulische Kopplungselement eine auf das Druckmedium wirkende Druckschraube aufweist, durch die der hydraulische Druck des hydraulischen Kopplungselements einstellbar ist.

Das hydraulische Kopplungselement sowie die mit diesem zusammenwirkenden Elemente am Elektromotor sowie an der Anwendungsvorrichtung sind derart ausgebildet, dass durch einen einzustellenden hydraulischen Druck des Druckmediums ein Spannsitz des hydraulischen Kupplungselements mechanisch gleichförmig auf die Oberflächen derart verteilt wird, dass es auf der gesamten Oberfläche zu einer gleichförmigen Kraftverteilung kommt.

Eine vorteilhafte Anwendung besteht darin, dass der Elektromotor als Torquemotor ausgebildet ist und die Motorwelle und/oder die Kopplungswelle als Hohlwelle ausgebildet sind. Durch die Verwendung einer Hohlwelle kann das hydraulische Kopplungselement passgenau seine optimale Kopplungswirkung entfalten.

Zur passgenauen Aufnahme des hydraulischen Kopplungselements im bzw. am Elektromotor ist es lediglich erforderlich, dass der Elektromotor eine Ausnehmung zur Aufnahme des hydraulischen Kupplungselements aufweist, wobei die Abmessungen der Ausnehmung mit den Abmessungen des Kupplungselements korrespondieren.

Für eine sichere und einfache Handhabung der Durchveränderung des hydraulischen Kopplungselements ist es vorteilhaft, dass der Elektromotor im Bereich des hydraulischen Kopplungselements eine weitere Ausnehmung zur Bedienung der Druckschraube oder zur Kopplung mit einem Druckmedium aufweist. Somit ist durch diese weitere Ausnehmung die Druckschraube für einen Druckaufbau bzw. einen Druckabbau die Druckschraube auf einfache Weise gut zugänglich oder im Falle eines Anschlusses eines Druckschlauches kann dieser auf einfache Weise angeschlossen werden.

Besonders vorteilhaft für einen möglichst universellen Einsatz des Elektromotors für verschiedenste Anwendungen ist es, wenn das hydraulische Kopplungselement zum Zusammenwirken mit einem am Elektromotor vorgesehenen standardisierten Interface ausgebildet ist. Entsprechende ist das standardisierte Interface des Elektromotors derart ausgebildet ist, unabhängig von mechanischen Konturen unterschiedliche Kundenwellen in das standardisierte Interface zu verspannen.

Im Folgenden wird die Erfindung anhand der in den Figuren dargestellten Ausführungsbeispiele näher beschrieben und erläutert.

Es zeigen:
- FIG 1: ein erstes Ausführungsbeispiel eines Elektromotors mit einem hydraulischen Kopplungselement,
- FIG 2: ein Ausführungsbeispiel eines hydraulischen Kopplungselements zur mechanischen Kopplung einer Motorwelle und einer Anwendungswelle,
- FIG 3: ein weiteres Ausführungsbeispiel eines Elektromotors mit einem hydraulischen Kopplungselement und
- FIG 4: das Ausführungsbeispiel des Elektromotors aus FIG 3 in der Seitenansicht.

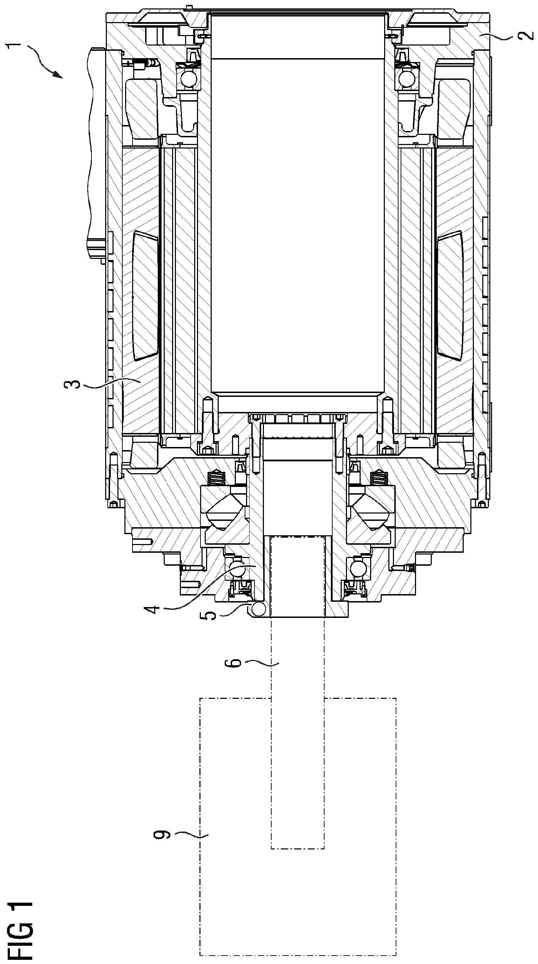

FIG 1 zeigt ein erstes Ausführungsbeispiel eines Elektromotors 1 mit einem hydraulischen Kopplungselement 5. Der Elektromotor 1 besteht im Wesentlichen aus einem Gehäuse 2 und weist zumindest einen Stator 3 und einen Rotor 4 auf. Darüber hinaus ist bei dem in FIG 1 dargestellten Ausführungsbeispiel jeweils gestrichelt eine Welle 6 einer Anwendungsvorrichtung 9 dargestellt. Die Kopplung der Welle 6 der Anwendungsvorrichtung 9 mit dem Rotor 4 bzw. einer mit dem Rotor 4 gekoppelten Rotorwelle erfolgt mittels des hydraulischen Kopplungselememts 5, das derart ausgebildet ist, einen gleichförmig verteilten hydraulischen Druck sowohl auf dem Rotor 4 oder die Rotorwelle als auch die zu koppelnde Welle 6 der Anwendungsvorrichtung 9 auszuüben. Die Vorteile einer derartigen hydraulischen Kopplung bestehen im Wesentlichen darin, dass die Montage der Anwendungswelle 6 mittels nur einer Schraube, die in FIG 1 aus Gründen der Übersichtlichkeit halber nicht näher dargestellt ist, erfolgt, wobei durch die gleichmäßige Verteilung des hydraulischen Drucks des Kopplungselements eine hohe Laufgenauigkeit ermöglicht wird, so dass kein aufwändiges Aufrichten der zu koppelnden Wellen erforderlich ist. Somit sind insgesamt höhere Drehmomente und Axialkräfte übertragbar und aufgrund der einfachen Handhabbarkeit sind mögliche Anwendungen eines derartigen Motors mit einem hydraulischen Kopplungselement keinerlei Grenzen gesetzt, so kann auch eine Anwendung im Lebensmittelbereich vorteilhaft ist, wo für unterschiedliche Anwendungen ein schneller Wechsel einer Anwenderwelle 6 erforderlich ist.

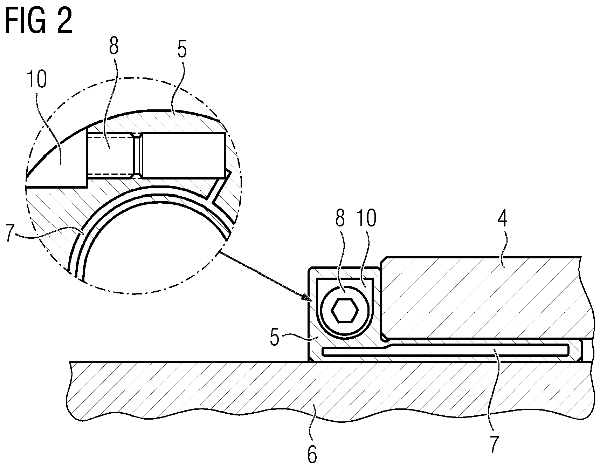

FIG 2 zeigt ein Ausführungsbeispiel eines hydraulischen Kopplungselements 5 zur mechanischen Kopplung einer Motorwelle 4 und einer Anwendungswelle 6 die Einstellung eines Druckmediums 7, erfolgt mittels einer Druckschraube 8, die es ermöglicht, den Druck des Druckmediums 7 zu verändern. Das hydraulische Kopplungselement 5 ist als hydraulische Spannbuchse ausgebildet, die aus einer doppelwandigen mit dem Druckmedium 7 gefüllten Stahlhülse und einem Flanschteil besteht, wobei die Spannbuches 5 zur Gewährleistung einer gleichförmigen Kraftverteilung auf die gesamte Oberfläche im Bereich der zu koppelnden Rotorwelle 4 und der Anwenderwelle 6 der Anwendungsvorrichtung 9 (vergleiche FIG 1) vorgesehen ist. Das hydraulische Kopplungselement 5 weist eine auf das Druckmedium 7 wirkende Druckschraube auf, durch die der hydraulische Druck des hydraulischen Kopplungselements 5 einstellbar ist. Somit kann mittels lediglich einer Schraube, nämlich der Druckschraube 8, der hydraulische Druck gleichmäßig über die gesamte Wirkoberfläche des Kopplungselements 5 erhöht oder gesenkt werden, so dass eine hohe Laufgenauigkeit der zu koppelnden Wellen erzielt wird und eine sehr einfache Montage von Anwendungen, in Form von Anwendungswellen 6, ermöglicht wird. Insgesamt sind durch die vollflächige und gleichmäßige Druckverteilung auch höhere Drehmomente und Axialkräfte übertragbar.

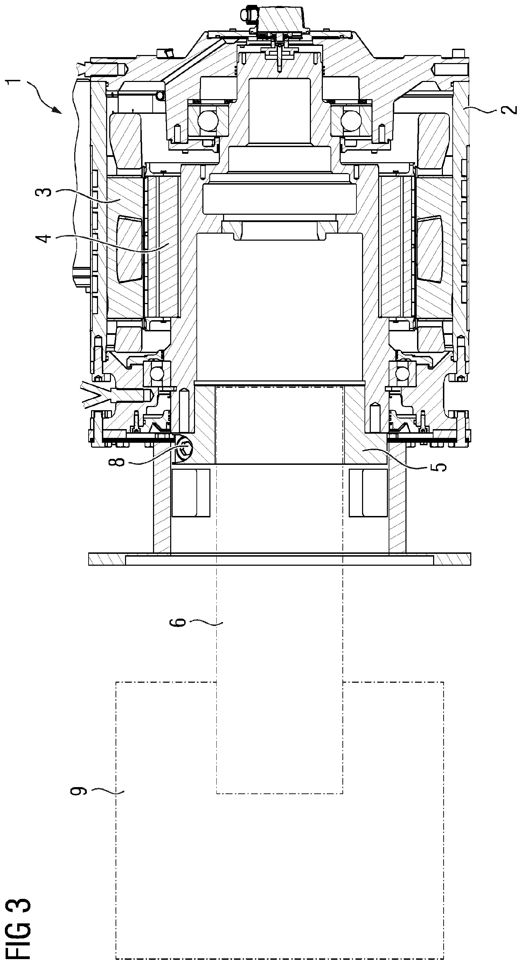

FIG 3 zeigt ein weiteres Ausführungsbeispiel eines Elektromotors, der im Wesentlichen ähnliche Komponenten wie der in FIG 1 gezeigte Elektromotor aufweist, so dass zur Vermeidung von Wiederholungen auf die Bezugszeichen zu FIG 1 verwiesen wird.

In FIG 3 ist nochmals klar erkennbar, dass der Motor 1 derart ausgestaltet ist, dass er das hydraulische Kopplungselement 5 quasi als standardisiertes Interface aufweist. Ebenso weist der Motor 1 eine Ausnehmung auf, durch die die Druckschraube 8 auf einfache Weise von außen zugänglich ist und für ein Einspannen bzw. Lösen der Anwendungswelle 6 der Anwendungsvorrichtung 9 auf einfache Weise zugänglich ist.

Je nach Bauart des Motors 1 bzw. der Anwendungsvorrichtung 9 ist es auch möglich, die Anwendungswelle von beliebigen Richtungen in den Motor einzuführen bzw. wieder zu lösen und herauszunehmen.

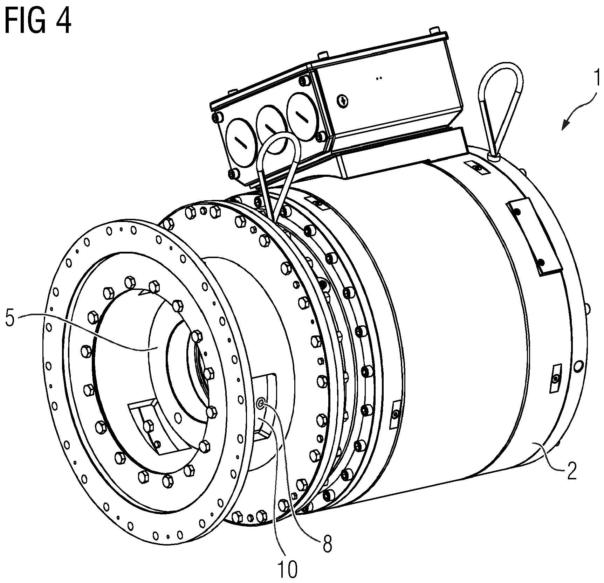

FIG 4 zeigt den in FIG 3 dargestellten Motor 1 in einer Seitenansicht. Der Elektromotor 1 weist eine Ausnehmung 10 auf, die dazu vorgesehen ist, eine Bedienung der Druckschraube 8 zu ermöglichen. Anstelle einer Druckschraube 8 ist es auch möglich, einen hydraulischen Anschluss vorzusehen, der mit einem externen Druckmedium verbindbar ist, so dass sich auf diese Weise der hydraulische Druck des Kopplungselements 5 einstellen lässt bzw. das Druckmedium gegebenenfalls auch nachfüllbar ist.

Zusammenfassend betrifft die Erfindung einen Elektromotor 1 mit einem Gehäuse 2 aufweisend zumindest einen Stator 3 und einen Rotor 4, wobei der Elektromotor 1 Mittel 5 zur Aufnahme einer Kopplungselements 5 zur mechanischen Kopplung des Rotors 4 oder einer mit dem Rotor gekoppelten Rotorwelle mit einer mit dem Rotor 4 zu koppelnden Welle 6. Für die Herstellung eines möglichst optimalen Kraftschlusses wird vorgeschlagen, dass das Kopplungselement 5 als hydraulisches Kopplungselement ausgebildet ist.

## Patentansprüche

1. Elektromotor (1) mit einem Gehäuse (2) aufweisend zumindest einen Stator (3) und einen Rotor (4), wobei der Elektromotor (1) Mittel (5) zur Aufnahme einer Kopplungselements (5) zur mechanischen Kopplung des Rotors (4) oder einer mit dem Rotor gekoppelten Rotorwelle mit einer mit dem Rotor (4) zu koppelnden Welle (6) einer Anwendungsvorrichtung (9) aufweist,
**dadurch gekennzeichnet,**
**dass** das Kopplungselement (5) als hydraulisches Kopplungselement ausgebildet ist, das derart ausgebildet ist, einen gleichförmig verteilten hydraulischen Druck sowohl auf den Rotor (4) oder die Rotorwelle als auch auf die zu koppelnde Welle (6) der Anwendungsvorrichtung (9) auszuüben.

2. Elektromotor (1) nach Anspruch 1, wobei das hydraulische Kopplungselement (5) als hydraulische Spannbuchse ausgebildet ist, die aus einer doppelwandigen mit einem Druckmedium (7) gefüllten Stahlhülse und einem Flanschteil besteht, wobei die Spannbuchse (5) zur Gewährleistung einer gleichförmigen Kraftverteilung auf die gesamte Oberflächen im Bereich der der zu koppelnden Rotorwelle und der Welle (6) der Anwendungsvorrichtung (9) vorgesehen ist.

3. Elektromotor (1) nach einem der Ansprüche 1 oder 2, wobei das hydraulische Kopplungselement (5) eine auf das Druckmedium (7) wirkende Druckschraube (8) aufweist, durch die der hydraulische Druck des hydraulischen Kopplungselements einstellbar ist.

4. Elektromotor (1) nach einem der Ansprüche 1 bis 3, wobei durch einen einzustellenden hydraulischen Druck des Druckmediums (7), ein Spannsitz des hydraulischen Kupplungselements (5) mechanisch gleichförmig auf die Oberflächen derart verteilt wird, dass es auf der gesamten Oberfläche zu einer gleichförmigen Kraftverteilung kommt.

5. Elektromotor (1) nach einem der Ansprüche 1 bis 4,
wobei der Elektromotor (1) als Torquemotor ausgebildet ist und die Motorwelle (4) und/oder die Kopplungswelle als Hohlwelle ausgebildet sind.

6. Elektromotor (1) nach einem der Ansprüche 1 bis 5,
wobei der Elektromotor (1) eine Ausnehmung (10) zur Aufnahme des hydraulischen Kupplungselements (5) aufweist, wobei die Abmessungen der Ausnehmung mit den Abmessungen des Kupplungselements (5) korrespondieren.

7. Elektromotor (1) nach einem der Ansprüche 1 bis 6,
wobei der Elektromotor (1) im Bereich des hydraulischen Kopplungselements (5) eine weitere Ausnehmung zur Bedienung der Druckschraube oder zur Kopplung mit einem Druckmedium aufweist.

8. Elektromotor (1) nach einem der Ansprüche 1 bis 7,
wobei das hydraulische Kopplungselement (5) zum Zusammenwirken mit einem am Elektromotor (1) vorgesehenen standardisierten Interface ausgebildet ist.

9. Elektromotor (1) nach einem der Ansprüche 1 bis 8,
wobei das standardisierte Interface des Elektromotors (1) derart ausgebildet ist, unabhängig von mechanischen Konturen unterschiedliche Kundenwellen in das standardisierte Interface zu verspannen.

10. Verfahren zur Kopplung einer Rotorwelle (4) eines Elektromotor (1) nach einem der Ansprüche 1 bis 9 mit einer mit der Rotorwelle zu koppelnden Kopplungswelle (6) einer Anwendungsvorrichtung, wobei der Elektromotor (1) ein Gehäuse (2) mit mindestens einem Stator (3) und einem Rotor (4) aufweist, wobei zur Kopplung der Rotorwelle (4) mit der Rotorwelle der zu koppelnden Kopplungswelle (6) der Anwendungsvorrichtung ein als hydraulisches Kopplungselement ausgebildetes Kopplungselement (5) verwendet wird.
